# FASCICULE DE BREVET EUROPEEN

(11) **EP 0 806 618 B1**
(45) Date de publication et mention de la délivrance du brevet: **14.08.2002**
(21) Numéro de dépôt: 97400982.1
(22) Date de dépôt: 30.04.1997
(51) Int. Cl.: F25D 29/00, F25D 3/11

(54) **Dispositif et procédé de croûtage en ligne de produits**
Gerät und Verfahren zur oberflächlichen in-Line Abkühlung von Produkten
Device and process for the in line superficial cooling of products

(30) Priorité: 06.05.1996 FR 9605638
(43) Date de publication de la demande: 12.11.1997
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Cloarec, Alain, 14/22 rue de l'Yvette, 91160 Longjumeau (FR)
(74) Mandataire: Conan, Philippe Claude

(56) Documents cités:
- FR-A- 2 588 067
- US-A- 5 054 292

## Description

La présente invention concerne un dispositif de croutage en ligne de produits destiné à alimenter une unité de préparation des produits disposée en aval du dispositif, du type comportant une enceinte munie de moyens de transfert de frigories pour le croutage des produits et au moins un convoyeur d'introduction des produits dans l'enceinte et d'extraction de ceux-ci. L'invention concerne également un procédé tel que défini dans le préambule de la revendication 8. Un tel dispositif et un tel procédé sont par exemple connus du document FR-A-2 588 067.

Le croutage d'un produit est une opération consistant à congeler superficiellement au moins l'une des faces du produit en vue de faciliter sa préparation ultérieure. Cette technique est utilisée en particulier afin de faciliter le tranchage de barres de jambon et de longes de porc, mais est également applicable à d'autres produits alimentaires devant subir une découpe, le salami, le saucisson, les saucisses, les fromages, les poissons.

Les appareils de croutage connus actuellement sont formés par des tunnels, ouverts à une extrémité d'introduction des produits et à une extrémité d'extraction des produits et au travers desquels s'étend un convoyeur de transport des produits fonctionnant en continu. A l'intérieur du tunnel sont disposés des moyens de transfert de frigories, formés notamment par des moyens de pulvérisation d'un fluide cryogénique par exemple de l'azote liquide.

Les tunnels actuels fonctionnent de manière continue, de sorte que les produits entrent et sortent du tunnel à une fréquence constante. Si un incident se produit sur une unité de tranchage disposée en aval du tunnel, nécessitant un arrêt prolongé de celle-ci, le convoyeur du tunnel est arrêté par un opérateur, de sorte que les produits séjournent pendant une durée prolongée à l'intérieur du tunnel. Ils sont ainsi refroidis pendant une durée excessive, de sorte qu'ils subissent une congélation trop importante, et en particulier une congélation à coeur.

Lors du redémarrage de l'installation, les produits sortant du tunnel, congelés de manière excessive, risquent d'endommager les lames de coupe de l'unité de tranchage.

Dés problèmes comparables sont rencontrés si l'unité de tranchage est amenée à fonctionner à un rythme plus lent, par exemple du fait d'un réglage différent de l'épaisseur des tranches produites. Il est alors nécessaire de procéder manuellement à un nouveau réglage de la vitesse d'avancement du convoyeur, et/ou à la définition d'une nouvelle consigne pour les moyens de transfert de frigories.

L'invention a pour but de proposer un dispositif et un procédé de croutage en ligne, ne présentant pas les inconvénients mentionnés ci-dessus, et en particulier qui permettent un état de croutage satisfaisant des produits, quelle que soit la cadence de production de l'unité de préparation des produits disposée en aval.

A cet effet, l'invention a pour objet un dispositif de croutage en ligne de produits destiné à alimenter une unité de préparation des produits disposée en aval, du type précité, caractérisé en ce qu'il comporte des moyens de réception d'un signal de demande d'un produit émis par ladite unité de préparation, des moyens de commande du ou de chaque convoyeur pour, lors de la réception d'un signal de demande, extraire de l'enceinte le produit crouté le plus ancien dans l'enceinte, et sensiblement simultanément introduire dans l'enceinte un nouveau produit à crouter, et en ce qu'il comporte des moyens de commande des moyens de transfert de frigories pour commander la quantité de frigories à transférer aux produits présents dans l'enceinte par unité de temps en fonction d'au moins une durée écoulée entre deux instants successifs de réception de signaux de demande précédents issus de l'unité de préparation.

Suivant des modes particuliers de réalisation, le dispositif de croutage peut présenter l'une ou plusieurs des caractéristiques suivantes :
- les moyens de commande des moyens de transfert de frigories comportent des moyens de mémorisation pour chaque produit présent dans l'enceinte de la durée écoulée depuis son introduction dans l'enceinte et de la quantité de frigories transférée à ce produit, et ils comportent en outre des moyens de calcul de la quantité de frigories à transférer au produit le plus ancien en vue de l'achèvement de son croutage et des moyens d'estimation de la durée jusqu'à l'instant de réception du signal de demande suivant, la quantité de frigories à transférer aux produits présents dans l'enceinte par unité de temps étant déterminée à partir de la quantité calculée de frigories à transférer au produit le plus ancien et de ladite durée estimée ;
- les moyens d'estimation de la durée écoulée jusqu'à l'instant de réception du signal de demande suivant comportent des moyens d'établissement de la moyenne de durées écoulées entre les instants successifs de réception des signaux de demande précédents ;
- la durée moyenne établie est calculée à partir des k dernières durées écoulées, k étant le nombre de produits simultanément contenus dans l'enceinte ;
- il comporte des moyens d'arrêt des moyens de transfert de frigories, au cas où la durée écoulée depuis l'instant de réception du dernier signal de demande excède une première durée prédéterminée ;
- il comporte des moyens de ventilation de l'enceinte en vue du réchauffement de celle-ci, au cas où la durée écoulée depuis l'instant de réception du dernier signal de demande dépasse une seconde durée prédéterminée ; et
- l'enceinte comporte des portes d'obturation des ouvertures d'introduction et d'extraction des produits, ces portes étant normalement fermées en dehors des périodes d'introduction et d'extraction des produits et les moyens de ventilation de l'enceinte comportent des moyens d'ouverture momentanée de ces portes en dehors des périodes d'introduction et d'extraction.

L'invention concerne également un procédé de croutage tel que revendiqué aux revendications 8 à 14 ci-après.

L'invention sera mieux comprise à la lecture de la description qui va suivre, donnée uniquement à titre d'exemple et faite en se référant aux dessins sur lesquels :
- La figure 1 est une vue schématique d'une installation de tranchage de jambon mettant en oeuvre un dispositif de croutage selon l'invention ;
- La figure 2 est une vue de dessus du dispositif de croutage de la figure 1, dont le capot supérieur a été retiré ;
- La figure 3 est un organigramme explicitant les étapes mises en oeuvre par les moyens de commande du dispositif de croutage selon l'invention ; et
- La figure 4 est un schéma montrant la structure de la pile de données mémorisées par les moyens de commande.

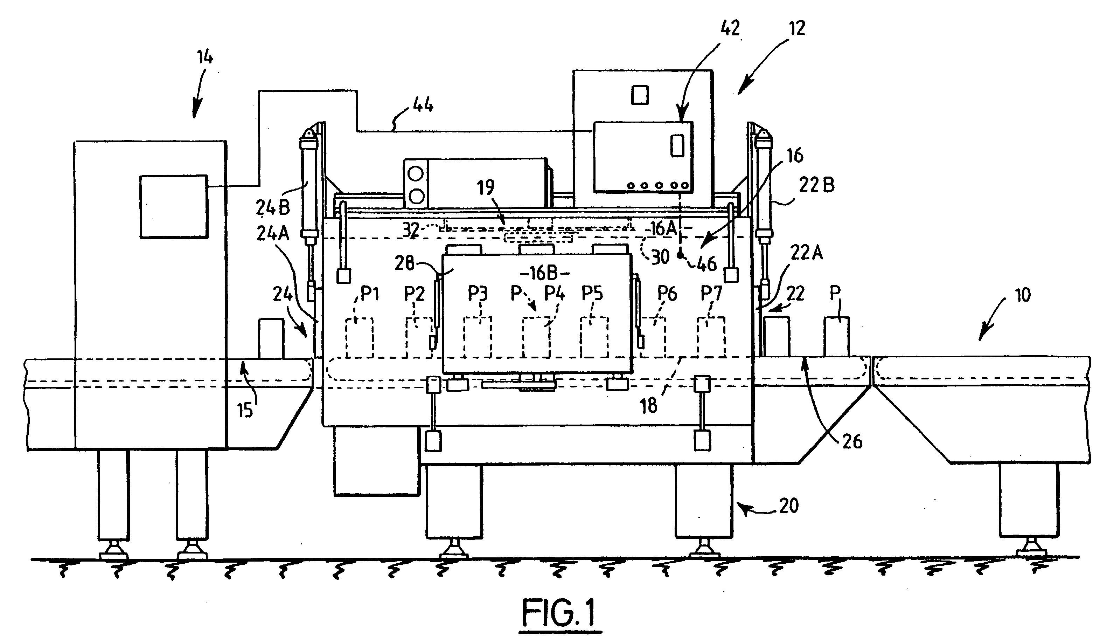

L'installation représentée sur la figure 1 est destinée au tranchage de barres de jambon. Elle comporte successivement un convoyeur 10 d'amenée des barres de jambon, un dispositif de croutage 12 selon l'invention et une unité 14 de tranchage des barres de jambon croutées.

Cette dernière est adaptée pour découper en tranches d'une épaisseur déterminée les barres de jambon préalablement croûtées issues du dispositif de croutage 12. Elle comporte un convoyeur 15 prélevant les barres de jambon en sortant du dispositif 12 de croutage. L'unité de tranchage est adaptée pour émettre un signal de demande de produit (ici, un bloc de jambon) lorsque le tranchage du produit précédent est achevé. Ainsi, la machine de tranchage peut être continuellement alimentée, ce qui optimise son rendement.

Le dispositif de croutage 12 comporte essentiellement une enceinte 16 en forme de tunnel traversée par un convoyeur unique 18 de transport des produits P à croûter. Ce convoyeur 18 est formé par exemple par un convoyeur à bande. L'enceinte 16 comporte des moyens 19 de transfert de frigories vers les produits P.

L'enceinte 16 est supportée par un châssis 20 posé sur le sol. Elle est de forme générale parallélépipédique et comporte deux ouvertures opposées 22, 24 formant respectivement une ouverture d'introduction des produits à croûter et une ouverture d'extraction des produits croûtés. La longueur de l'enceinte, mesurée entre les deux ouvertures opposées, est limitée à la longueur nécessaire pour disposer à la suite sur le convoyeur un ensemble de sept produits devant être croûtés.

Le convoyeur 18 traverse l'ouverture d'introduction 22. Son extrémité avant délimite, en avant de l'enceinte 16, une zone d'attente 26 pour les produits avant leur introduction dans l'enceinte. Il traverse l'enceinte de part en part et s'achève immédiatement en amont de l'ouverture d'extraction 24.

Chaque ouverture 22, 24 est associée à une porte coulissante d'obturation notée respectivement 22A, 24A. Chaque porte est actionnée par un vérin 22B, 24B permettant son déplacement entre une position d'obturation de l'ouverture, isolant l'intérieur de l'enceinte du milieu ambiant, et une position escamotée dans laquelle l'ouverture est libérée, permettant le passage des produits et assurant la libre communication entre l'intérieur de l'enceinte et le milieu ambiant.

L'enceinte 16 comporte dans ses parois latérales des volets **28** articulés permettant l'accès à l'intérieur de l'enceinte, notamment pour son nettoyage.

Toutes les parois de l'enceinte, les portes 22A, 24A et les volets 28 sont revêtus d'un isolant thermique afin d'éviter les transferts de chaleur entre l'intérieur dé l'enceinte et le milieu ambiant.

L'enceinte 16 est séparée longitudinalement en deux compartiments 16A, 16B par une cloison horizontale 30. Le compartiment inférieur 16A est traversé par le convoyeur 18 et forme l'espace de croutage des produits.

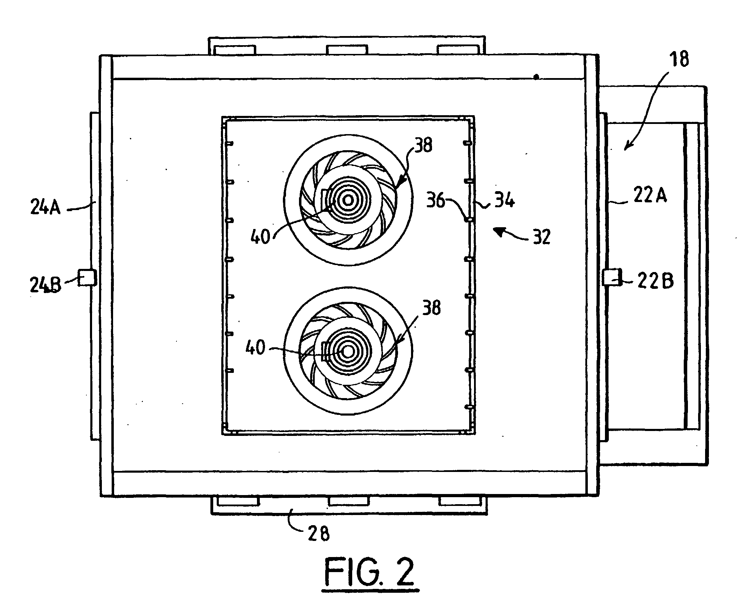

Le compartiment supérieur 16B, visible sur la figure 2, reçoit des moyens 32 de pulvérisation d'azote liquide. Ces derniers comportent par exemple une conduite en couronne 34 portant des buses 36 de pulvérisation. Cette couronne est reliée à des moyens commandables d'alimentation en azote liquide (non représentés).

Par ailleurs, deux passages 38, ménagés dans la paroi 30 et au travers de chacun desquels est disposé un ventilateur ou une turbine 40 assurent le transfert de l'azote pulvérisé du compartiment supérieur 16A au compartiment inférieur 16B afin d'assurer le transfert de frigories vers les produits P à croûter. Ainsi, l'intérieur de l'enceinte est maintenue à une température sensiblement égale à -80°C et une circulation d'azote gazeux à faible température est maintenue autour du produit, assurant ainsi leur croutage par convection forcée.

Le dispositif de croutage comporte en outre des moyens de commande 42 formés par exemple par un automate programmable. Ils sont adaptés notamment pour commander l'avance pas à pas du convoyeur 18, l'actionnement des vérins 22A, 22B et la régulation des moyens de transfert de frigories 19. En particulier, les moyens de commande 42 sont adaptés pour commander la mise en marche des ventilateurs 40 et de l'alimentation des moyens 32 de pulvérisation afin d'assurer le transfert d'une quantité déterminée de frigories aux produits P par unité de temps.

Un sonde de température 46, reliée aux moyens de commande 42, est en outre prévue dans le compartiment inférieur 16B.

Les moyens de commande 42 sont connectés par une ligne de transmission de données 44 à l'unité de tranchage 14 afin de recevoir de celle-ci un signal de demande d'un produit. Ils sont adaptés pour calculer la durée écoulée entre deux instants successifs de réception d'un signal de demande de produit. Ces durées écoulées sont stockées dans une pile dont la structure sera décrite par la suite.

Telle que représentée sur la figure 1, la longueur de l'enceinte 16 est adaptée pour la réception simultanée de sept produits à croûter espacés d'un même intervalle de distance. Le convoyeur 10 est synchronisé avec le convoyeur 18 du dispositif de croutage afin d'amener sur la zone d'attente 26 les produits espacés dudit intervalle.

Les produits contenus dans l'enceinte sont dans des états de croutage différents. Le croutage du produit P₁ disposé immédiatement en amont de la porte d'extraction 24A et le plus ancien dans l'enceinte est pratiquement achevé. En revanche, le produit P₇ disposé immédiatement en aval de la porte d'admission 22A et le dernier entré dans l'enceinte est au premier stade de croutage. Les produits P₂ à P₆ sont dans des états de croutage intermédiaires.

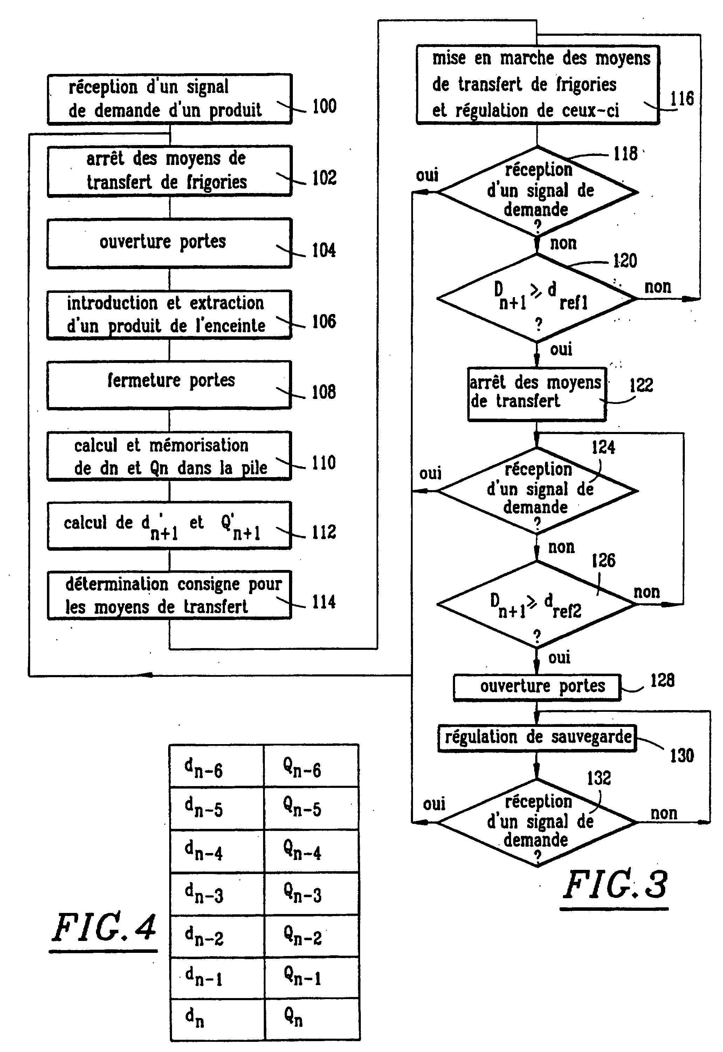

Le fonctionnement du dispositif de croutage va maintenant être décrit en regard de l'organigramme de la figure 3, explicitant le procédé de commande mis en oeuvre par les moyens de commande 42 en régime permanent de fonctionnement de l'installation.

Lors de la réception d'un signal de demande de produit à l'étape 100, les moyens de commande 42 arrêtent, à l'étape 102, les moyens 19 de transfert de frigories par coupure de l'alimentation en azote et arrêt éventuel des ventilateurs 40. Ils actionnent, à l'étape 104, les vérins 22B et 24B afin de provoquer l'ouverture des portes. Ils provoquent ensuite, à l'étape 106, l'avance d'un pas du convoyeur 18 afin que celui-ci extrait de l'enceinte 16 le produit croûté P le plus ancien et introduise simultanément un nouveau produit à croûter par la porte 22. Après cela, les portes sont refermées à l'étape 108.

Par ailleurs, les moyens de commande 42 calculent, à l'étape 110, la durée écoulée dₙ entre les deux derniers signaux de demande reçus. Ils mémorisent cette valeur dans une pile R à sept éléments de type "premier entré-premier sorti" (communément appelé FIFO), dont la structure est représentée sur la figure 4. Ainsi, cette pile contient les durées des sept derniers cycles de fonctionnement du dispositif, un cycle ayant lieu entre deux demandes de produit successives.

Les moyens de commande 42 mémorisent en outre dans ladite pile la quantité de frigories notée Qₙ transférée à chaque produit dans l'enceinte au cours du dernier cycle écoulé. On conçoit que chaque produit contenu dans l'enceinte reçoit une même quantité de frigories et que celle-ci peut être calculée à partir de la température mesurée à chaque instant dans l'enceinte et de la durée du cycle.

Il est ainsi possible à partir des données contenues dans la pile R de déterminer la quantité de frigories transférée à chaque produit depuis son entrée dans l'enceinte et son état de croutage correspondant, ainsi que la durée écoulée depuis son introduction.

A l'étape 112, les moyens de commande 42 calculent la durée estimée du cycle suivant noté d'ₙ₊₁. Pour ce faire, ils approximent celle-ci à la moyenne des sept durées calculées stockées dans la pile R.

Au cours de cette même étape, ils calculent la quantité de frigories Q'ₙ₊₁ devant être transférée au produit le plus ancien dans l'enceinte afin que le croutage de celui-ci soit achevé. A partir de cette quantité, les moyens de commande 42 déterminent, à l'étape 114, la consigne de régulation des moyens de transfert 19 afin que le transfert de la quantité Q'ₙ₊₁ de frigories s'effectue progressivement pendant la durée estimée d'ₙ₊₁ du cycle. Cette consigne correspond en pratique à la quantité de frigories à transférer aux produits dans l'enceinte par unité de temps. Les moyens de transfert 19 sont alors mis en marche, à l'étape 116, en fonction de cette consigne.

Au cours du fonctionnement des moyens de transfert de frigories, dès que les moyens de commande 42 reçoivent, à l'étape 118, un signal de demande de produit, les étapes 102 à 116 sont à nouveau mises en oeuvre, un produit croûté étant extrait de l'enceinte et un nouveau produit à croûter y étant introduit.

Si, à l'étape 120, la durée mesurée Dₙ₊₁ écoulée depuis la réception du dernier signal de demande de produit est supérieur à une première durée prédéterminée d_{ref1}, par exemple égale à 110 % de la durée estimée d'ₙ₊₁, les moyens de commande 42 provoquent, à l'étape 122, l'arrêt des moyens de transfert de frigories 19 ou le ralentissement de leur débit pour éviter un croutage trop important des produits. Ce croutage excessif pourrait en effet être nuisible pour l'unité de tranchage disposée en aval. Un tel retard de réception du signal de demande peut être dû à un changement de cycle de fonctionnement de l'unité de tranchage, ou encore à un incident survenu sur celle-ci.

Si un signal de demande est reçu, à l'étape 124, alors les étapes 102 à 116 sont à nouveau mises en oeuvre. Si tel n'est pas le cas et que la durée écoulée Dₙ₊₁ depuis la réception du dernier signal de demande est supérieure à une seconde durée prédéterminée d_{ref2}, par exemple égale à 120% de la durée d'ₙ₊₁ (étape 126), alors les moyens de commande 42 actionnent, à l'étape 128, les vérins 22B et 24B afin de provoquer l'ouverture des portes. Ainsi, l'intérieur de l'enceinte est mis en contact avec l'air ambiant afin de provoquer une ventilation conduisant à une remontée de la température à l'intérieur de celle-ci et ainsi éviter une congélation à coeur des produits à croûter.

Les moyens de commande 42 assurent ensuite, à l'étape 130, une commande adaptée des moyens 19 de transfert de frigories et de l'ouverture des portes 22A, 24A afin de chercher à garder un niveau de croutage acceptable au produit le plus ancien dans l'enceinte. Cette étape 130 s'achève lorsque, à l'étape 132, un signal de demande est obtenu. Les étapes 102 à 116 sont alors mises en oeuvre.

Il est possible, lors du calcul de la durée moyenne d'ₙ₊₁ pour estimer la durée du cycle en cours, d'exclure du calcul de la moyenne les durées supérieures à une valeur prédéterminée par exemple égales à la seconde valeur prédéterminée d_{ref2}, qui correspondent à des cycles anormaux de fonctionnement de l'unité de tranchage (panne, changement de réglage).

Lors de la mise en route de l'installation, des valeurs moyennes sont stockées dans les registres de la pile R pour les durées et les quantités de frigories transférées.

On conçoit qu'avec une telle installation, les cycles de fonctionnement peuvent être de longueurs variables, sans que l'état de croutage des produits ne s'en trouve affecté. Même en cas de problèmes importants sur l'unité de tranchage, provoquant un arrêt prolongé, les produits ne risquent pas une congélation excessive qui pourrait endommager les lames ou tout autre partie de l'unité de tranchage.

Le dispositif de croutage décrit ici comporte des moyens de transfert de frigories par convexion forcée. Toutefois, tout autre moyen de transfert de frigories peut être utilisé, par exemple des moyens de pulvérisation directe d'un liquide cryogénique sur les produits ou encore la mise en contact des produits avec ce liquide cryogénique. De plus, dans l'installation décrite, l'azote liquide peut être remplacé par du dioxyde de carbone liquide pour l'alimentation de la couronne de pulvérisation.

Dans l'exemple décrit, le dispositif s'attache à la détermination de la quantité de frigories à transférer aux produits contenus dans l'enceinte. En particulier, les valeurs stockées dans la pile R correspondent aux quantités de frigories reçues par les produits lors de chaque cycle. Toutefois, le dispositif peut, en variante, s'attacher à la régulation de la température dans le compartiment inférieur 16B de l'enceinte. En effet, la quantité de frigories transférée est liée directement à la température dans l'enceinte et au temps de séjour, de sorte qu'il est équivalent de commander la quantité de frigories transférée ou la température dans l'enceinte. Dans ce cas, les valeurs stockées dans la pile R en plus de la durée de chaque cycle est la température du compartiment inférieur de l'enceinte mesurée par le capteur 46.

En variante, le dispositif de croutage peut comporter plusieurs convoyeurs indépendants.

## Revendications

1. Dispositif (12) de croûtage en ligne de produits (P) destiné à alimenter une unité (14) de préparation des produits disposée en aval du dispositif (12), du type comportant une enceinte (16) munie de moyens (19) de transfert de frigories pour le croûtage des produits et au moins un convoyeur (18) d'introduction des produits dans l'enceinte (16) et d'extraction de ceux-ci, **caractérisé en ce qu'**il comporte des moyens (42, 44) de réception d'un signal de demande d'un produit émis par ladite unité de préparation (14), des moyens de commande (42) du ou de chaque convoyeur (18) pour, lors de la réception d'un signal de demande, extraire de l'enceinte (16) le produit croûté le plus ancien dans l'enceinte, et sensiblement simultanément introduire dans l'enceinte (16) un nouveau produit à crouter, et **en ce qu'**il comporte des moyens de commande (42) des moyens de transfert de frigories pour commander la quantité de frigories à transférer aux produits présents dans l'enceinte par unité de temps en fonction d'au moins une durée écoulée entre deux instants successifs de réception de signaux de demande précédents issus de l'unité de préparation (14).

2. Dispositif selon la revendication 1, **caractérisé en ce que** les moyens de commande des moyens de transfert de frigories comportent des moyens (R) de mémorisation pour chaque produit présent dans l'enceinte de la durée écoulée depuis son introduction dans l'enceinte et de la quantité de frigories transférée à ce produit, et **en ce qu'**ils comportent en outre des moyens (42) de calcul de la quantité de frigories à transférer au produit le plus ancien en vue de l'achèvement de son croûtage et des moyens (42) d'estimation de la durée jusqu'à l'instant de réception du signal de demande suivant, la quantité de frigories à transférer aux produits présents dans l'enceinte par unité de temps étant déterminée à partir de la quantité calculée de frigories à transférer au produit le plus ancien et de ladite durée estimée.

3. Dispositif selon la revendication 2, **caractérisé en ce que** les moyens (42) d'estimation de la durée écoulée jusqu'à l'instant de réception du signal de demande suivant comportent des moyens d'établissement de la moyenne de durées écoulées entre les instants successifs de réception des signaux de demande précédents.

4. Dispositif selon la revendication 3, **caractérisé en ce que** la durée moyenne établie est calculée à partir des k dernières durées écoulées, k étant le nombre de produits simultanément contenus dans l'enceinte.

5. Dispositif selon l'une quelconque des revendications précédentes, **caractérisé en ce qu'**il comporte des moyens (42) d'arrêt des moyens (19) de transfert de frigories, au cas où la durée écoulée depuis l'instant de réception du dernier signal de demande excède une première durée prédéterminée.

6. Dispositif selon l'une quelconque des revendications précédentes, **caractérisé en ce qu'**il comporte des moyens (22A, 22B, 24A, 24B) de ventilation de l'enceinte en vue du réchauffement de celle-ci, au cas où la durée écoulée depuis l'instant de réception du dernier signal de demande dépasse une seconde durée prédéterminée.

7. Dispositif selon la revendication 6, **caractérisé en ce que** l'enceinte comporte des portes (22A, 24A) d'obturation des ouvertures (22, 24) d'introduction et d'extraction des produits, ces portes étant normalement fermées en dehors des périodes d'introduction et d'extraction des produits et **en ce que** les moyens de ventilation de l'enceinte comportent des moyens (22B, 24B) d'ouverture momentanée de ces portes en dehors des périodes d'introduction et d'extraction.

8. Procédé de croûtage en ligne de produits (P) destiné à alimenter une unité (14) de préparation des produits disposée en aval d'un dispositif (12) de croûtage, dispositif du type comportant une enceinte (16) munie de moyens (19) de transfert de frigories pour le croûtage des produits et au moins un convoyeur (18) d'introduction des produits dans l'enceinte (16) et d'extraction de ceux-ci, **caractérisé par** la mise en oeuvre des mesures suivantes :
- on réalise l'émission, par ladite unité de préparation (14), d'un signal de demande d'un produit ;
- on réalise la réception, par des moyens (42, 44) de réception, du signal de demande de produit émis ;
- on commande (42) le ou chaque convoyeur (18) pour, lors de la réception d'un tel signal de demande, extraire de l'enceinte (16) le produit croûté le plus ancien dans l'enceinte, et sensiblement simultanément introduire dans l'enceinte (16) un nouveau produit à croûter ;
- on commande (42) lesdits moyens de transfert de frigories pour commander la quantité de frigories à transférer aux produits présents dans l'enceinte par unité de temps en fonction d'au moins une durée écoulée entre deux instants successifs de réception de signaux de demande précédents issus de l'unité de préparation (14).

9. Procédé selon la revendication 8, **caractérisé en ce que** ladite opération de commande des moyens de transfert de frigories comporte :
- une mémorisation (R), pour chaque produit présent dans l'enceinte, de la durée écoulée depuis son introduction dans l'enceinte et de la quantité de frigories transférée à ce produit,
- un calcul (42) de la quantité de frigories à transférer au produit le plus ancien en vue de l'achèvement de son croûtage ; ainsi que
- une estimation de la durée jusqu'à l'instant de réception du signal de demande suivant, la quantité de frigories à transférer aux produits présents dans l'enceinte par unité de temps étant déterminée à partir de la quantité calculée de frigories à transférer au produit le plus ancien et de ladite durée estimée.

10. Procédé selon la revendication 9, **caractérisé en ce que** ladite opération d'estimation de la durée écoulée jusqu'à l'instant de réception du signal de demande suivant comporte l'établissement de la moyenne de durées écoulées entre les instants successifs de réception des signaux de demande précédents.

11. Procédé selon la revendication 10, **caractérisé en ce que** la durée moyenne établie est calculée à partir des k dernières durées écoulées, k étant le nombre de produits simultanément contenus dans l'enceinte.

12. Procédé selon l'une quelconque des revendications 8 à 11, **caractérisé en ce que** l'on commande (42) l'arrêt des moyens (19) de transfert de frigories, au cas où la durée écoulée depuis l'instant de réception du dernier signal de demande excède une première durée prédéterminée.

13. Procédé selon l'une quelconque des revendications 8 à 12, **caractérisé en ce que** l'on effectue une ventilation (22A, 22B, 24A, 24B) de l'enceinte en vue du réchauffement de celle-ci, au cas où la durée écoulée depuis l'instant de réception du dernier signal de demande dépasse une seconde durée prédéterminée.

14. Procédé selon la revendication 13, **caractérisé en ce que**, l'enceinte comportant des portes (22A, 24A) d'obturation des ouvertures (22, 24) d'introduction et d'extraction des produits, on maintient ces portes normalement fermées en dehors des périodes d'introduction et d'extraction des produits, et **en ce que** ladite ventilation de l'enceinte comporte alors une ouverture momentanée (22B, 24B) de ces portes en dehors des périodes d'introduction et d'extraction.

## Claims

1. Device (12) for the on-line crust freezing of products (P) intended to feed a unit (14) for preparing products, the unit being placed downstream of the device (12), of the type comprising a chamber (16) provided with refrigerating means (19) in order to crust-freeze products and at least one conveyor (18) for introducing products into the chamber (16) and for extracting them, **characterized in that** it comprises means (42, 44) for receiving a product request signal emitted by the said preparation unit (14), means (42) for controlling the or each conveyor (18) in order, on receiving a request signal, to extract from the chamber (16) the oldest crust-frozen product in the chamber, and substantially simultaneously to introduce into the chamber (16) a new product to be crust-frozen, and **in that** it comprises means (42) for controlling the refrigerating means in order to control the amount of heat energy to be removed from the products present in the chamber per unit time depending on at least one time period elapsed between two successive instants of receiving previous request signals from the preparation unit (14).

2. Device according to Claim 1, **characterized in that** the means for controlling the refrigerating means comprise means (R) for storing, for each product present in the chamber, the time period elapsed from its introduction into the chamber and the amount of heat energy removed from this product, and **in that** they furthermore comprise means (42) for calculating the amount of heat energy removed from the oldest product for the purpose of completing its crust freezing and means (42) for estimating the time period up to the instant of receiving the following request signal, the amount of heat energy to be removed from the products present in the chamber per unit time being determined from the calculated amount of heat energy to be removed from the oldest product and from the said estimated time period.

3. Device according to Claim 2, **characterized in that** the means (42) for estimating the time period elapsed up to the instant of receiving the following request signal comprise means of establishing the mean time period elapsed between the successive instant of receiving previous request signals.

4. Device according to Claim 3, **characterized in that** the mean time period established is calculated from the k last time periods elapsed, k being the number of products simultaneously contained in the chamber.

5. Device according to any one of the preceding claims, **characterized in that** it comprises means (42) for stopping the refrigerating means (19), in the case where the time period elapsed from the instant of receiving the last request signal exceeds a first predetermined time period.

6. Device according to any one of the preceding claims, **characterized in that** it comprises means (22A, 22B, 24A, 24B) of ventilating the chamber for the purpose of reheating the latter, in the case where the time period elapsed from the instant of receiving the last request signal exceeds a second predetermined time period.

7. Device according to Claim 6, **characterized in that** the chamber comprises doors (22A, 24A) for shutting off the openings (22, 24) for introducing and extracting products, these doors normally being shut outside periods of introducing and extracting products and **in that** the means of ventilating the chamber comprise means (22B, 24B) of temporarily opening these doors outside the introduction and extraction periods.

8. Method for the on-line crust freezing of products (P) intended to feed a unit (14) for preparing products placed downstream of a crust freezing device (12) of the type comprising a chamber (16) provided with refrigerating means (19) in order to crust-freeze products and at least one conveyor (18) for introducing products into the chamber (16) and for extracting them, **characterized by** implementing the following measures:
- a product request signal is emitted by the said preparation unit (14);
- the emitted product request signal is received by receiving means (42, 44);
- the or each conveyor (18) is controlled (42) in order, on receiving such a request signal, to extract from the chamber (16) the oldest crust-frozen product in the chamber and, substantially simultaneously, to introduce into the chamber (16) a new product to be crust-frozen;
- the said refrigerating means are controlled (42) in order to control the amount of heat energy to be removed from the products present in the chamber per unit time depending on at least one time period elapsed between two successive instants of receiving previous request signals from the preparation unit (14).

9. Method according to Claim 8, **characterized in that** the said operation for controlling the refrigerating means comprises:
- storage (R), for each product present in the chamber, of the time period elapsed from its introduction into the chamber and of the amount of heat energy removed from this product;
- calculation (42) of the amount of heat energy to be removed from the oldest product for the purpose of completing its crust freezing; and
- an estimate of the time period up to the instant of receiving the following request signal, the amount of heat energy to be removed from the products present in the chamber per unit time being determined from the calculated amount of heat energy to be removed from the oldest product and from the said estimated time period.

10. Method according to Claim 9, **characterized in that** the said operation of estimating the time period elapsed up to the instant of receiving the following request signal comprises establishing the mean time period elapsed between the successive instants of receiving previous request signals.

11. Method according to Claim 10, **characterized in that** the mean time period established is calculated from the k last time periods elapsed, k being the number of products simultaneously contained in the chamber.

12. Method according to any one of Claims 8 to 11, **characterized in that** the stopping of the refrigerating means (19) for removing heat energy is ordered (42) in the case where the time period elapsed from the instant of receiving the last request signal exceeds a first predetermined time period.

13. Method according to any one of Claims 8 to 12, **characterized in that** ventilation (22A, 22B, 24A, 24B) of the chamber is carried out for the purpose of reheating the latter, in the case where the time period elapsed from the instant of receiving the last request signal exceeds a second predetermined time period.

14. Method according to Claim 13, **characterized in that**, the chamber comprising doors (22A, 24A) for shutting off the openings (22, 24) for introducing and extracting products, these doors are normally kept shut outside periods of introducing and extracting products, and **in that** the said ventilation of the chamber then comprises a temporary opening (22B, 24B) of these doors outside the introduction and extraction periods.

## Patentansprüche

1. Vorrichtung (12) zum In-line-Oberflächengefrieren von Produkten (P), die zur Speisung einer der Vorrichtung (12) nachgeschalteten Produktzubereitungseinheit (14) bestimmt ist, jener Art, die einen mit Kälteenergieübertragungsmitteln (19) zum Oberflächengefrieren der Produkte ausgestatteten Raum (16) und mindestens eine Fördereinrichtung (18) zur Einführung der Produkte in den Raum (16) und zu ihrer Abführung umfaßt, **dadurch gekennzeichnet, daß** sie Mittel (42, 44) zum Empfang eines durch die Zubereitungseinheit (14) abgegebenen Anforderungssignals für ein Produkt, Mittel (42) zur Steuerung der oder jeder Fördereinrichtung (18) dahingehend, bei Empfang eines Anforderungssignals das am längsten in dem Raum (16) verweilende, oberflächengefrorene Produkt aus dem Raum abzuführen und ein neues oberflächenzugefrierendes Produkt im wesentlichen gleichzeitig in den Raum (16) einzuführen und Mittel (42) zur Steuerung der Kälteenergieübertragungsmittel zur Steuerung der auf die in dem Raum vorhandenen Produkte pro Zeiteinheit in Abhängigkeit von mindestens einer zwischen zwei aufeinanderfolgenden Zeitpunkten des Empfangs von von der Zubereitungseinheit (14) abgegebenen, vorhergehenden Anforderungssignalen abgelaufenen Zeitdauer zu übertragende Kälteenergiemenge umfaßt.

2. Vorrichtung nach Anspruch 1, **dadurch gekennzeichnet, daß** die Mittel zur Steuerung der Kälteenergieübertragungsmittel Mittel (R) zur Speicherung - für jedes in dem Raum vorhandene Produkt - der seit seiner Einführung in den Raum abgelaufenen Zeitdauer und der auf dieses Produkt übertragenen Kälteenergiemenge und des weiteren Mittel (42) zur Berechnung der auf das älteste Produkt zu übertragenden Kälteenergiemenge zwecks Erreichen seines Oberflächengefrierens sowie Mittel (42) zur Abschätzung der Zeitdauer bis zum Zeitpunkt des Empfangs des nächsten Anforderungssignals umfassen, wobei die pro Zeiteinheit auf die in dem Raum vorhandenen Produkte zu übertragende Kälteenergiemenge aus der berechneten, auf das älteste Produkt zu übertragenden Kälteenergiemenge und der geschätzten Zeitdauer bestimmt wird.

3. Vorrichtung nach Anspruch 2, **dadurch gekennzeichnet, daß** die Mittel (42) zur Abschätzung der bis zum Zeitpunkt des Empfangs des nächsten Anforderungssignals abgelaufenen Zeitdauer Mittel zur Bildung des Durchschnitts zwischen den aufeinanderfolgenden Zeitpunkten des Empfangs der vorhergehenden Anforderungssignale abgelaufener Zeitdauern umfassen.

4. Vorrichtung nach Anspruch 3, **dadurch gekennzeichnet, daß** die ermittelte durchschnittliche Zeitdauer aus den k letzten abgelaufenen Zeitdauern berechnet wird, wobei k die Anzahl von gleichzeitig im Raum enthaltenen Produkten ist.

5. Vorrichtung nach einem der vorhergehenden Ansprüche, **dadurch gekennzeichnet, daß** sie Mittel (42) zum Anhalten der Kälteenergieübertragungsmittel (19) im Fall, daß die seit dem Zeitpunkt des Empfangs des letzten Anforderungssignals abgelaufene Zeitdauer eine vorbestimmte erste Zeitdauer übertrifft, umfaßt.

6. Vorrichtung nach einem der vorhergehenden Ansprüche, **dadurch gekennzeichnet, daß** sie Mittel (22A, 22B, 24A, 24B) zur Lüftung des Raums zwecks seiner Erwärmung im Fall, daß die seit dem Zeitpunkt des Empfangs des letzten Anforderungssignals abgelaufene Zeitdauer eine vorbestimmte zweite Zeitdauer übertrifft, umfaßt.

7. Vorrichtung nach Anspruch 6, **dadurch gekennzeichnet, daß** der Raum Türen (22A, 24A) zum Verschließen der Öffnungen (22, 24) zum Einführen und Abführen der Produkte umfaßt, wobei diese Türen normalerweise außerhalb der Einführ- und Abführzeitdauern der Produkte geschlossen sind, und daß die Mittel zur Lüftung des Raums Mittel (22B, 24B) zum vorübergehenden Öffnen dieser Türen außerhalb der Einführ- und Abführzeitdauern umfassen.

8. Verfahren zum In-line-Oberflächengefrieren von Produkten (P), das zur Speisung einer einer Oberflächengefriervorrichtung (12) nachgeschalteten Produktzubereitungseinheit (14) bestimmt ist, wobei die Vorrichtung jener Art ist, die einen mit Kälteenergieübertragungsmitteln (19) zum Oberflächengefrieren der Produkte ausgestatteten Raum und mindestens eine Fördereinrichtung (18) zur Einführung der Produkte in den Raum (16) und zu ihrer Abführung umfaßt, **gekennzeichnet durch** die folgenden Schritte:
- Bewirkung der Abgabe eines Produktanforderungssignals **durch** die Zubereitungseinheit (14);
- Bewirkung des Empfangs des abgegebenen Produktanforderungssignals **durch** die Empfangsmittel (42, 44);
- Steuerung (42) der oder jeder Fördereinrichtung (18) zwecks - beim Empfang eines solchen Anforderungssignals - Abführung des am längsten in dem Raum (16) verweilenden oberflächengefrorenen Produkts aus dem Raum und im wesentlichen gleichzeitiger Einführung eines neuen oberflächenzugefrierenden Produkts in den Raum (16);
- Steuerung (42) der Kälteenergieübertragungsmittel zur Steuerung der pro Zeiteinheit auf die in dem Raum vorhandenen Produkte zu übertragende Kälteenergiemenge in Abhängigkeit von mindestens einer zwischen zwei aufeinanderfolgenden Zeitpunkten des Empfangs von vorhergehenden, von der Zubereitungseinheit (14) abgegebenen Anforderungssignalen abgelaufenen Zeitdauer.

9. Verfahren nach Anspruch 8, **dadurch gekennzeichnet, daß** der Steuervorgang der Kälteenergieübertragungsmittel folgendes umfaßt:
- Speicherung (R) - für jedes in dem Raum vorhandene Produkt - der seit seiner Einführung in den Raum abgelaufenen Zeitdauer und der auf dieses Produkt übertragenen Kälteenergiemenge;
- Berechnung (42) der auf das älteste Produkt zu übertragenden Kälteenergiemenge zwecks Erreichen seines Oberflächengefrierens; sowie
- Abschätzung der Zeitdauer bis zum Zeitpunkt des Empfangs des nächsten Anforderungssignals, wobei die pro Zeiteinheit auf die in dem Raum vorhandenen Produkte zu übertragende Kälteenergiemenge aus der berechneten, auf das älteste Produkt zu übertragenden Kälteenergiemenge und der geschätzten Zeitdauer bestimmt wird.

10. Verfahren nach Anspruch 9, **dadurch gekennzeichnet, daß** der Abschätzvorgang der bis zum Zeitpunkt des Empfangs des nächsten Anforderungssignals abgelaufenen Zeitdauer die Bildung des Durchschnitts zwischen den aufeinanderfolgenden Zeitpunkten des Empfangs der vorhergehenden Anforderungssignale abgelaufener Zeitdauern umfaßt.

11. Verfahren nach Anspruch 10, **dadurch gekennzeichnet, daß** die ermittelle durchschnittliche Zeitdauer aus den k letzten abgelaufenen Zeitdauern berechnet wird, wobei k die Anzahl von gleichzeitig im Raum enthaltenen Produkten ist.

12. Verfahren nach einem der Ansprüche 8 bis 11, **dadurch gekennzeichnet, daß** man das Anhalten der Kälteenergieübertragungsmittel (19) in dem Fall ansteuert (42), daß die seit dem Zeitpunkt des Empfangs des letzten Anforderungssignals abgelaufene Zeitdauer eine vorbestimmte erste Zeitdauer übertrifft.

13. Verfahren nach einem der Ansprüche 8 bis 12, **dadurch gekennzeichnet, daß** man eine Lüftung (22A, 22B, 24A, 24B) des Raums zwecks seiner Erwärmung in dem Fall bewirkt, daß die seit dem Zeitpunkt des Empfangs des letzten Anforderungssignals abgelaufene Zeitdauer eine vorbestimmte zweite Zeitdauer übertrifft.

14. Verfahren nach Anspruch 13, **dadurch gekennzeichnet, daß** man die Türen des Türen (22A, 24A) zum Verschließen der Öffnungen (22, 24) zum Einführen und Abführen der Produkte enthaltenden Raums normalerweise außerhalb der Einführ- und Abführzeitdauern der Produkte geschlossen hält, und daß die Lüftung des Raums dann ein vorübergehendes Öffnen (22B, 24B) dieser Türen außerhalb der Einführ- und Abführzeitdauern umfaßt.
